# EUROPEAN PATENT SPECIFICATION

(11) **EP 0 575 665 B1**
(45) Date of publication and mention of the grant of the patent: **11.11.1998**
(21) Application number: 92121961.4
(22) Date of filing: 23.12.1992
(51) Int. Cl.: G11B 17/22

(54) **Disk player**
Plattenspieler
Lecteur de disques

(30) Priority: 25.06.1992 JP 193077/92; 09.09.1992 JP 63189/92
(43) Date of publication of application: 29.12.1993
(73) Proprietor: SANYO ELECTRIC CO., LTD., Moriguchi-shi, Osaka (JP); Tottori Sanyo Electric Co., Ltd., Tottori-shi Tottori-ken (JP)
(72) Inventor: Tamiya, Tadanori, Tottori-Shi, Tottori-ken (JP); Oota, Takumi, Tottori-Shi, Tottori-ken (JP); Kawaguchi, Takeji, Tottori-shi, Tottori-ken (JP); Kishimoto, Yasuhiro, Tottori-shi, Tottori-ken (JP)
(74) Representative: Glawe, Delfs, Moll & Partner

(56) References cited:
- EP-A- 0 063 894
- EP-A- 0 517 402
- WO-A-88/03694
- US-A- 4 864 551

## Description

### BACKGROUND OF THE INVENTION

### Field of the Invention

The present invention relates generally to a disk player for playing a disc on which music information or the like is recorded, and more particularly, to a disk player so adapted as to be made small, compact and lightweight.

### Description of the Prior Art

Examples of discs known in recent years include one so adapted that a magazine having a plurality of disks loaded therein is inserted into a chassis and a disk selected from the magazine is loaded in a player body so that the disk can be played, as disclosed in Japanese Patent Laid-Open Gazette No. 206951/1988 or in US-A-4 864 551, which discloses the features of the pre-characterizing part of claim 1.

A loading device for selecting one disk from the magazine containing a plurality of disks and loading the same in the player body comprises an elevator mechanism for positioning the selected disk at a predetermined height relative to the player body and a sliding mechanism for moving the disk from the magazine to the player body at the height.

Each of the disks is mounted on a disk mounting plate, and the sliding mechanism moves the disk mounting plate holizontally to position a disk receiving portion of the disk between a spindle table and a clamper opposed to the lower side thereof in the player body. The clamper is raised to interpose the disk receiving portion of the disk between the spindle table and the clamper, thereby to raise the disk from the disk mounting plate so that the disk can be rotated without being brought into contact with the disk mounting plate.

Examples of systems of moving the disk and the disk mounting plate horizontally include a system of moving them linearly in a direction parallel to an edge of the disk mounting plate and a system of rotating them around one corner of the disk mounting plate as disclosed in the above described gazette. With either system, the disk contained in the magazine is moved horizontally over a distance which is not less than the diameter thereof and loaded in the player body.

In this type of disk player conventionally known, therefore, at least the size in the direction of movement of the disk must be set to not less than twice the diameter of the disk, which is disadvantageous in making the disk player small, compact and lightweight.

Particularly in the system of rotating the disk and the disk mounting plate around one corner of the disk mounting plate as disclosed in the above described gazette, the moving space of the disk mounting plate is further enlarged, which is still more disadvantageous in making the disk player small, compact and lightweight.

A further disk player is disclosed in WO 88/03694. This document shows a magazine for a disk player from which the disk to be played is pulled out only so far as to allow the disk drive to engage in the bore of the disk, a portion of the disk to be played still overlapps with the disk remaining in the magagzine.

The disk in this magazine are supported in compartments which are integral with the magazine and which remain in the magazine although the corresponding disk is played. A portion of each magazine overlapping with a portion of the disk to be played is provided with a reduced thickness.

### SUMMARY OF THE INVENTION

The present invention has been made in view of the above described circumstances and has for its object to provide a disk player which is small, compact and lightweight.

A disk player according to the present invention is defined in claim 1. The dependent claims are related to further advantageous aspects of the invention.

Furthermore, in the disk player according to the present invention, the cut away portion of the disk mounting plate is cut away in a semicircular shape. In addition, the lower surface of a top board, which is positioned above the disk carried in the player body, of the above described magazine is formed in a semicircular shape and to a small wall thickness.

Consequently, even if the spacing between the upper and lower disk mounting plates is set to be small, the disk conveyed into the player body is prevented from being brought into contact with the upper disk mounting plate or the lower surface of a top wall of the magazine.

Furthermore, the above described disk mounting plate has convex portions for regulating vertical movement which abut on the surface of the disk in the lower stage in its lower surface, and at least one of the convex portions is formed in such a place of the disc mounting plate as to abut on the surface of the disk in the lower stage which is positioned, when the disk mounting plate is completely moved to the player body, below the disk mounting plate.

Consequently, the vertical movement of the disk in the lower stage in the magazine is regulated by the disk mounting plate in the upper stage. In addition, even if the above described disk mounting plate in the upper stage is completely moved to the player body, whereby some of the convex portions are positioned outside of the disk in the lower stage, one of the convex portions abuts on the disk in the lower stage, thereby to make it possible to regulate the vertical movement of the disk in the lower stage even in a state where the disk mounting plate in the upper stage is conveyed into the player body.

Furthermore, the above described sliding mechanism comprises a guide for linearly guiding the disk mounting plate toward the player body, a sliding beam moving along the guide, an engaging member supported on one end of the sliding beam and projected forward from the sliding beam, and a driving device for driving the sliding beam back and forth.

The disk mounting plate is thus linearly moved, thereby to make it possible to make the moving space of the disk mounting plate smaller, as compared with the conventional system of rotating the disk and the disk mounting plate around one corner of the disk mounting plate.

Additionally, the above described guide comprises a pressure bar spring for pressing the disk mounting plate conveyed to the player body onto the guide.

Consequently, the vertical movement of the disk mounting plate conveyed to the player body is regulated by the guide and the pressure bar spring. Consequently, even if the disk player is carried by an automobile and receives vibration from a road surface, it is possible to prevent the above described disk mounting plate from being brought into contact with the disk under play.

Furthermore, in the disk player according to the present invention, the above described elevator mechanism drives the player body up and down, so that the selected one disk and the spindle table and the clamper opposed thereto in the above described player body are aligned in the vertical direction.

When a lot of disks are contained in the magazine, the height of the magazine is increased. Accordingly, it is preferable in decreasing the height of the disk player that the player body is raised and lowered, as compared with a case where the magazine is raised and lowered.

In the disk player, however, the above described opening which is an insertion port of the magazine is provided with a cover such that dust does not enter the disk player from the opening in cases such as during play. The width thereof can be made smaller than twice the width of the magazine. In a case where the width of the disc player is thus made small, if the cover having such a width as to allow the opening to be covered is provided slidably in the direction of the width of the disc player, the cover sticks out the disk player in the width direction at the time of opening the opening.

Therefore, the disk player comprises a cover sliding in the direction of the width of the disk player on the side of the front surface of the above described chassis and comprising a cover body and a sliding door, the sliding door being provided slidably in the width direction in relation to the cover body such that the effective width of the cover is variable, also in view of the above described circumstances.

Consequently, it is possible to completely close the opening by increasing the effective width of the cover as well as to completely open the opening by decreasing the effective width thereof.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a disk player according to the present invention;
Fig. 2 is a vertical sectional front view showing a player body;
Fig. 3 is a plan view showing the player body;
Fig. 4 is a plan view showing a locking mechanism;
Fig. 5 is a transverse sectional plan view showing a magazine corresponding to the present invention;
Fig. 6 is a vertical sectional front view showing the magazine corresponding to the present invention;
Fig. 7 is a plan view showing an elevator mechanism;
Fig. 8 is a front view showing main parts of the elevator mechanism;
Fig. 9 is a plan view showing a sliding mechanism;
Fig. 10 is a plan view showing a disk mounting plate used in the present invention;
Fig. 11 is a cross sectional view taken along a line A - A in Fig. 10 showing the disk mounting plate used in the present invention;
Fig. 12 is a cross sectional view showing a state where a pressure bar spring is engaged with an engaging concave portion of the disk mounting plate used in the present invention;
Fig. 13 is a perspective view showing a disk player having a cover attached thereto, which shows a state where an insertion port of a magazine is closed by the cover;
Fig. 14 is a perspective view showing a disk player having a cover attached thereto, which shows a state where an insertion port of a magazine is opened; and
Fig. 15 is a cross sectional view taken along a line X - X in Fig. 14 showing the disk player having a cover attached thereto.

### DESCRIPTION OF THE PREFERRED EMBODIMENTS

Description is now made of a disk player according to one embodiment of the present invention with reference to the drawings.

### (Schematic construction)

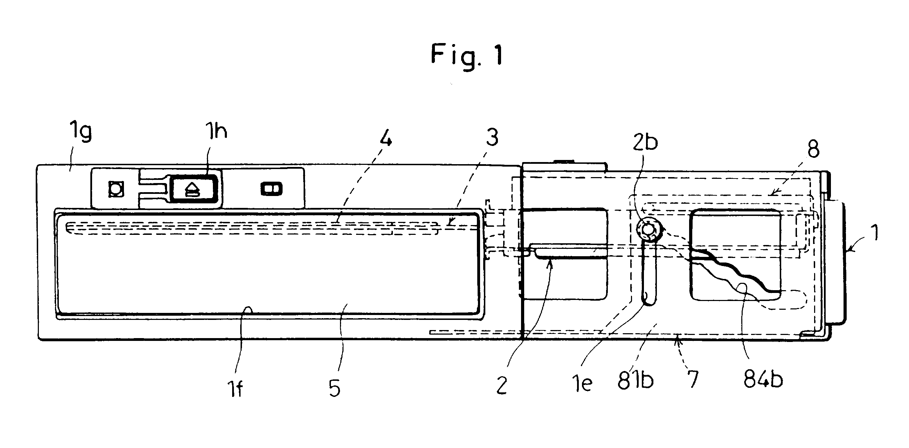

As illustrated in a plan view of Fig. 1, a chassis 1 is formed in the shape of such a box that a part whose area is a little larger than that of the left half of its front surface is opened, and a player body 2 is incorporated into the right part of the chassis 1. In addition, a magazine 5 capable of containing a plurality of (a maximum of six) disk mounting plates 4 on which disks 3 are mounted with suitable spacing in the vertical direction is inserted into and pulled out of the left part of the chassis 1 from the front surface.

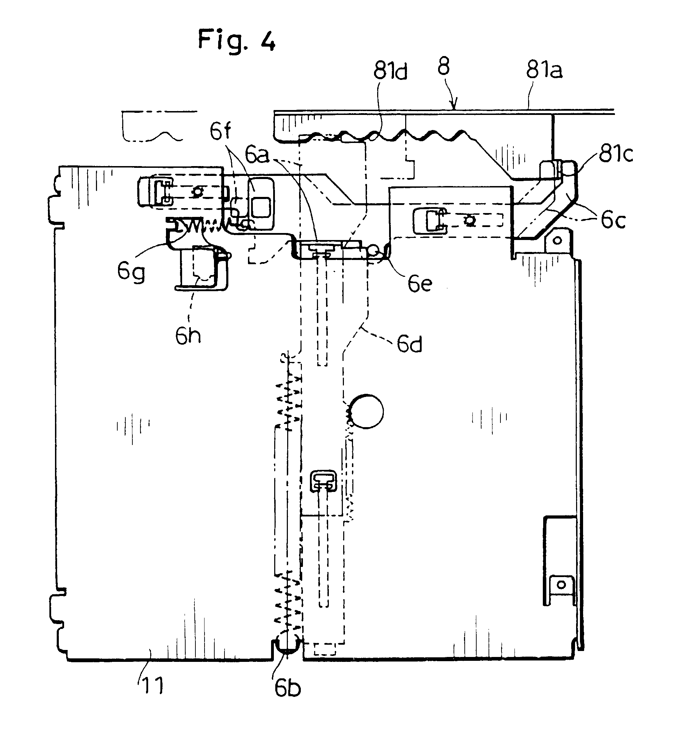

The magazine 5 is locked in the loading position by a locking mechanism 6 shown in a plan view of Fig. 4 when it is pushed into the loading position as described later, while being ejected forward by depressing an eject button 1h of a panel 1g provided around an opening 1f on the front surface of the chassis 1 to release the locking.

Furthermore, this disk player is provided with a loading device 7 for selecting the designated disk 3 and the disk mounting plate 4 supporting the same from the magazine 5 loaded and loading them in the player body 2.

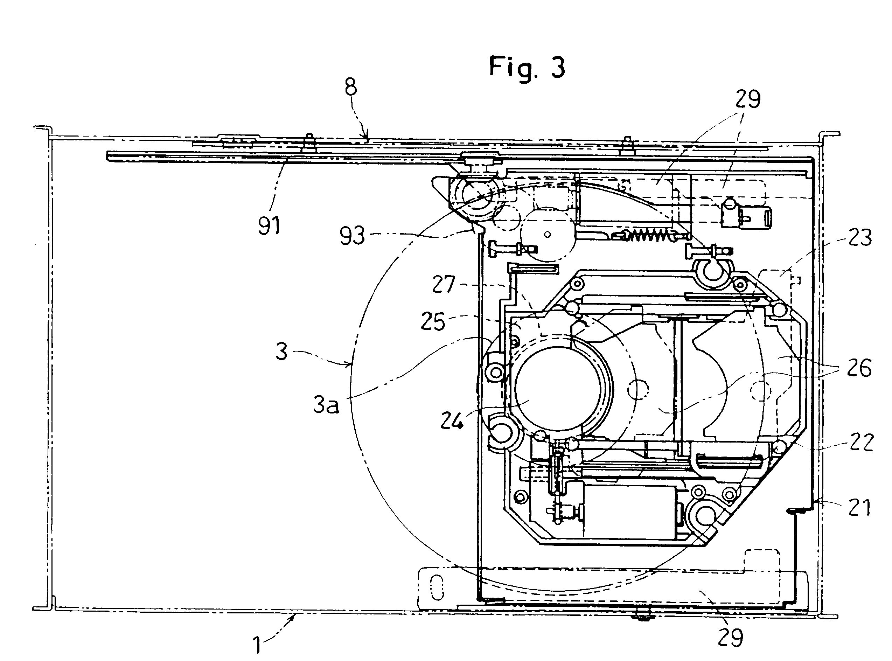

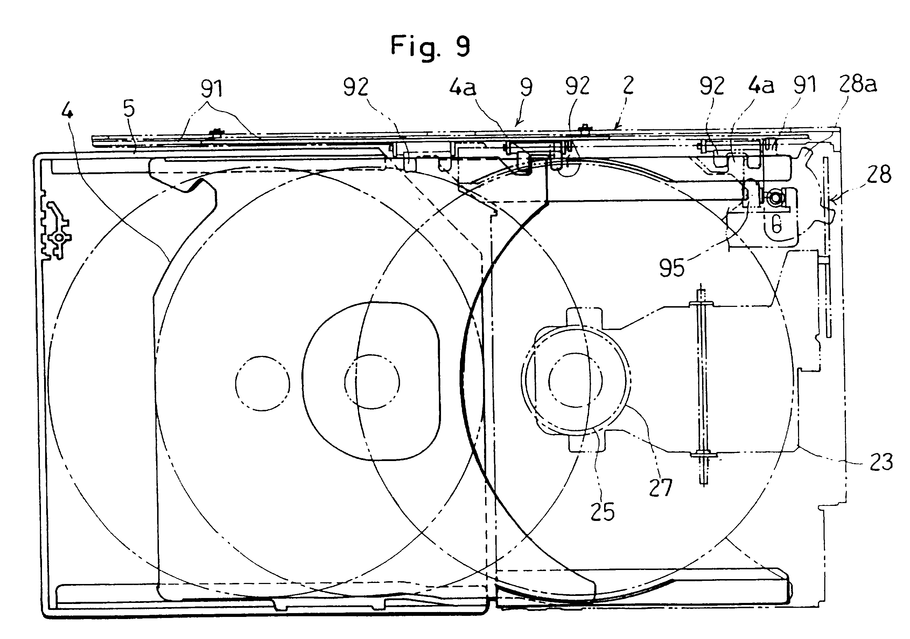

This loading device 7 comprises an elevator mechanism 8 for making the selected disk 3 and the disk mounting plate 4 equal in height to the player body 2, and a sliding mechanism 9 shown in Figs. 3 and 9 for moving the disk 3 and the disk mounting plate 4 horizontally toward the player body 2 which is made equal in height to the disc 3 and the disc mounting plate 4.

Meanwhile, the loading device 7 also functions as an unloading mechanism for containing the disk 3 and the disk mounting plate 4 in the magazine 5 from the player body 2 by operating the sliding mechanism 9 in the opposite direction.

The elevator mechanism 8 may be so constructed as to raise and lower the magazine 5, raise and lower the player body 2, and raise and lower both the magazine 5 and the player body 2. Since in the present embodiment, the number of disks contained in the magazine 5 is large, however, the elevator mechanism 8 is so constructed as to raise and lower the player body 2 such that the height of the whole disk player is decreased.

### (Player body)

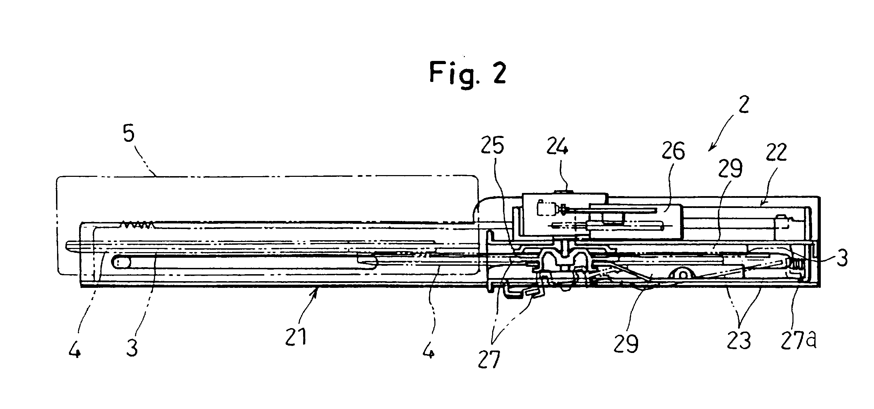

As illustrated in a vertical sectional front view of Fig. 2 and a plan view of Fig. 3, the player body 2 comprises a frame 21 so supported that it can be raised and lowered in a step shape on the chassis 1 through the elevator mechanism 8, a carriage 22 fixed to the upper surface of the frame 21, and a clamp supporting plate 23 slidably supported on the lower part of the frame 21.

A spindle motor 24 is fixed to the left part of the carriage 22, a spindle table 25 rotated and driven by the spindle motor 24 is arranged beneath the spindle motor 24, and a pickup unit 26 supported slidably in the lateral direction on the carriage 22 is provided on the right side of the spindle motor 24.

A clamper 27 is rotatably supported opposed to the spindle table 25 in a left end of the clamp supporting plate 23. The clamper 27 is brought into contact with the spindle table 25 by a spring 27a supported on a right end of the frame 21. In addition, an unclamping mechanism 28 shown in Fig. 9 is provided so as to separate the clamper 27 from the spindle table 25 by constant spacing against the spring 27a during a loading operation, during an unloading operation and at the time of unloading of the disk 3.

Furthermore, guides 29 for guiding a pair of upper and lower disk mounting plates 4 for insertion and pulling thereof are respectively provided at the front and rear parts of the frame 21.

### (Locking mechanism)

An inner bottom plate 11 shown in Fig. 4 is provided in a bottom part whose area is a little larger than that of the left half of the chassis 1, and the locking mechanism 6 for locking the magazine 5 in the loading position is assembled on the inner bottom plate 11.

This locking mechanism 6 comprises a cam plate 6a supported movably back and forth on the lower surface of the inner bottom plate 11 and having its rear end projected onto the inner bottom plate 11 so as to catch the rear surface of the magazine 5, a return spring 6b for urging the cam plate 6a forward, a locking plate 6c supported slidably in the lateral direction on the rear part of the lower surface of the inner bottom plate 11, a pin 6e projected toward the upper surface of the locking plate 6c and abutting on a cam 6d formed in a right edge of the cam plate 6a, a locking tool 6f projected toward the upper surface of the inner bottom plate 11 from the upper surface of the locking plate 6c, and a pressure bar spring 6g for urging the locking plate 6c leftward.

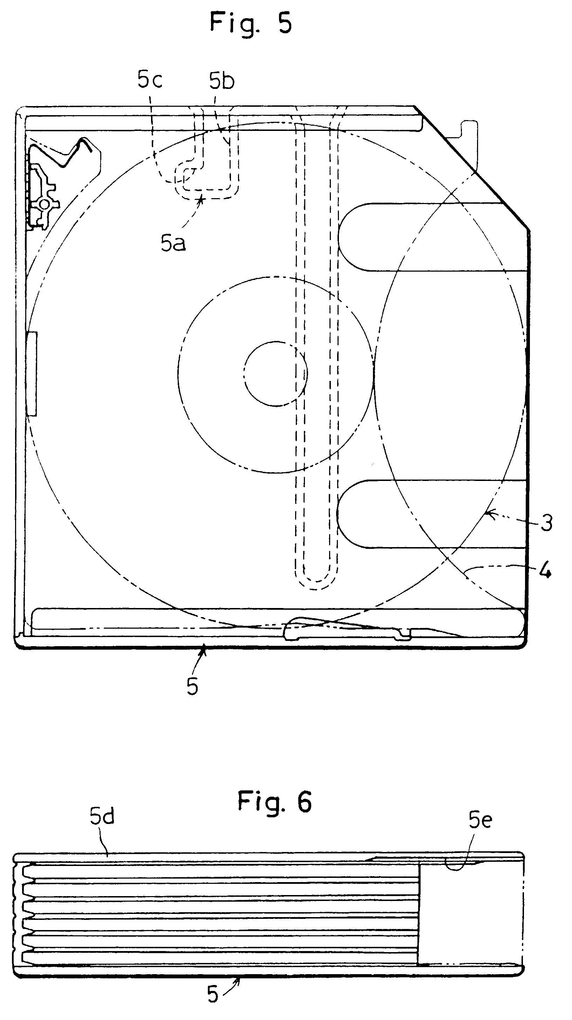

As illustrated in a transverse sectional plan view of Fig. 5, a concave groove 5a extending in an L shape forward from a position corresponding to the unlocking position of the above described locking tool 6f is formed in a rear end of the bottom surface of the magazine 5 to correspond to the locking tool 6f.

In a state where the magazine 5 is pulled out of the chassis 1, the above described locking tool 6f is pressed by the cam 6d to the unlocking position as indicated by a solid line in Fig. 4. When the magazine 5 is pressed into the chassis 1 from the opening 1f, the locking tool 6f is first fitted in a longitudinal side portion 5b of the concave groove 5a of the magazine 5. If the magazine 5 is completely pressed into the chassis 1, the cam plate 6a is pressed backward by not less than a constant amount on the rear surface of the magazine 5 as indicated by a two-dot and dash line in Fig. 4, whereby the locking tool 6f is pulled by the pressure bar spring 6g and is moved leftward to the locking position in a transverse side portion 5c of the concave groove 5a. In addition, the forward movement of the cam plate 6a is restricted by the magazine 5 which is locked in the pin 6e and the locking tool 6f. The fact that the locking tool 6f is in the locking position is detected by a micro switch 6h fixed to the lower surface of the inner bottom plate 11.

The locking of the locking mechanism 6 is released as follows by depressing the eject bottom 1h shown in Fig. 1 to operate the elevator mechanism 8.

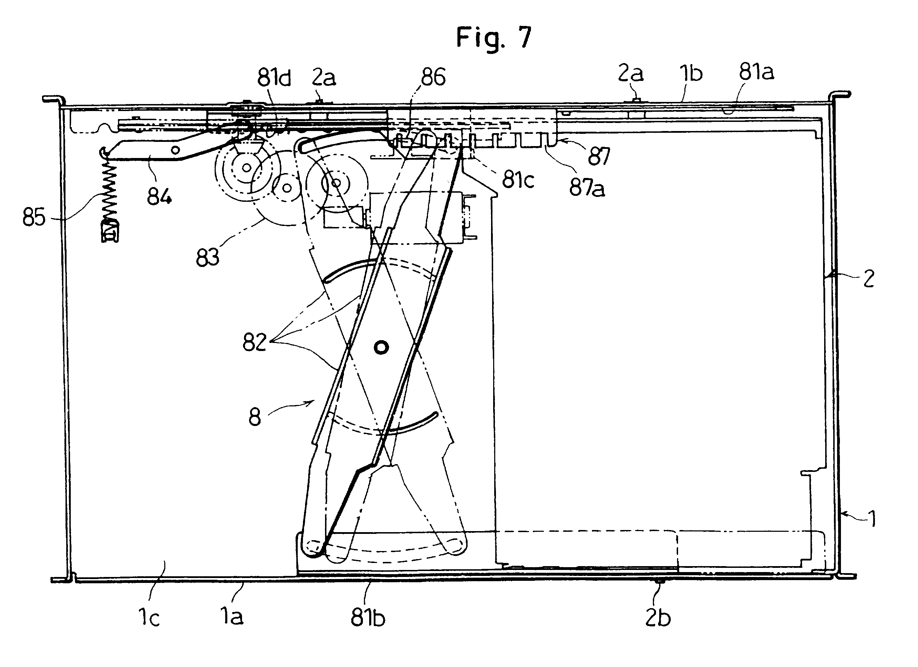

More specifically, if the eject bottom 1h is depressed, the elevator mechanism 8 shown in Fig. 7 is operated, whereby a sliding plate on the rear side 81a of the elevator mechanism 8 is moved to a right stroke end. The sliding plate 81a is provided with an engaging portion 81c projected forward. If the sliding plate 81a is moved to the right stroke end, the above described engaging portion 81c presses the locking plate 6c rightward from the locking position indicated by a two-dot and dash line in Fig. 4 and moves the same to the locking releasing position indicated by a solid line in Fig. 4. Consequently, the locking tool 6f is moved from the locking position in the transverse side portion 5c of the concave groove 5a and fitted in the longitudinal side portion 5b, to release locking.

If the locking is released, the magazine 5 and the plate 6a are urged forward by the return spring 6b, whereby the magazine 5 is ejected from the chassis 1. In addition, the cam plate 6a is moved forward, whereby the pin 6e and the locking plate 6c are locked in the locking releasing position by the cam 6d.

### (Elevator mechanism)

As illustrated in a plan view of Fig. 7, the above described elevator mechanism 8 comprises a pair of sliding plates 81a and 81b slidably supported in the lateral direction on respective front and rear walls of the chassis 1, a sliding beam 82 rotatably supported on a bottom wall 1c of the chassis 1 and having both ends engaged with both the sliding plates 81a and 81b, and a driving device 83 for driving the sliding plate on the rear side 81a.

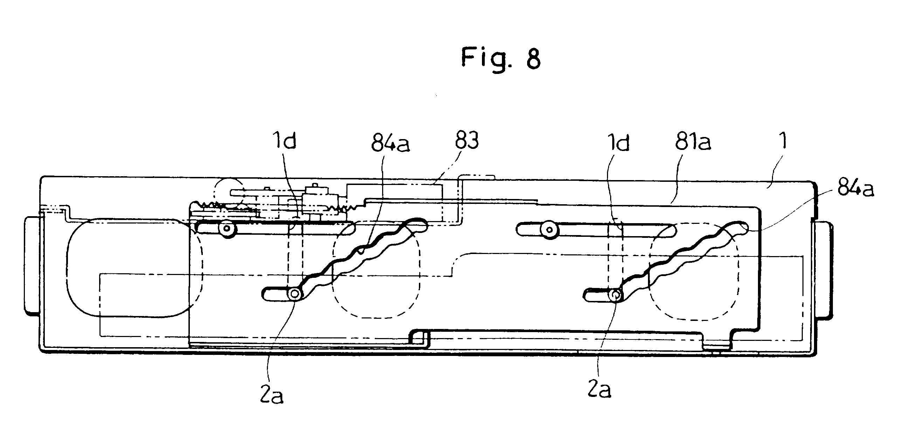

As illustrated in a front view of Fig. 8, a pair of right and left grooves 84a in the shape of steps which rise rightward is formed in the sliding plate on the rear side 81a, and a pair of right and left pins 2a projected from the rear surface of the frame 21 is inserted into the pair of grooves 84a and a pair of right and left longitudinal grooves 1d formed in a rear wall 1b of the chassis 1. Consequently, if the sliding plate on the rear side 81a slides, the rear part of the player body 2 is gradually raised and lowered.

Furthermore, as shown in Fig. 1, one groove 84b in the shape of steps which rise leftward is formed in the sliding plate on the front side 81b, and one pin 2b projected from the front surface of the frame 21 is inserted into the groove 84b and one longitudinal groove 1e formed in a front wall 1a of the chassis 1. In addition, the sliding plate on the front side 81b is operated in synchronism with the sliding plate on the rear side 81a through the sliding beam 82 and is slid in the opposite direction to the sliding plate on the rear side 81a, so that the front part of the player body 2 is gradually raised and lowered in synchronism with the rear part thereof.

As shown in Figs. 4 and 7, seven concave portions 81d corresponding to six positions corresponding to the heights of the respective disks 3 and the ejecting position are formed in the sliding plate on the rear side 81a. A positioning lever 84 supported slidably in the horizontal direction on the bottom wall 1c of the chassis 1 as shown in Fig. 7 is urged by a spring 85 to selectively enter the concave portions 81d, so that the sliding plate on the rear side 81a can be positioned and locked in the seven positions comprising the six positions corresponding to the heights of the respective disks 3 and the ejecting position.

As shown in Fig. 7, a photointerrupter 86 is fixed to the upper part of the chassis 1, and a marking plate 87 for interrupting an optical path of the photointerrupter 86 is connected to the above described sliding plate on the rear side 81a. Cuts 87a are formed with predetermined spacing in the lateral direction in the marking plate 87. Light of the photoreceptor 86 passes through the cuts 87a to detect the positions of both the sliding plates 81a and 81b and the height of the player body 2, so that the driving device 83 is stopped in the position where the optical path of the photointerrupter 86 passes through the cut 87a corresponding to the selected disk 3 or the ejecting position.

In Fig. 7, both the sliding plates 81a and 81b as well as the sliding beam 82 in the ejecting position are indicated by solid lines, the sliding beam 82 in a position corresponding to the lowermost disk 3 is indicated by a one-dot and dash line, and both the sliding plates 81a and 81b as well as the sliding beam 82 in a position corresponding to the uppermost disk 3 are indicated by two-dot and dash lines.

### (Sliding mechanism)

As illustrated in a plan view of Fig. 9, the above described sliding mechanism 9 comprises a sliding beam 91 supported slidably in the lateral direction on the rear surface of the player body 2, an engaging member 92 supported on a right end of the sliding beam 91 and projected forward from the sliding beam 91, and a driving device 93 assembled on the rear part of the player body 2 as shown in Fig. 3 for driving the sliding beam 91 back and forth.

The above described sliding beam 91 and the above described engaging member 92 are returned to the home position indicated by a one-dot and dash line in Fig. 9 when the disk 3 is returned to the magazine loaded in the chassis 1 from the player body 2 and then, is raised and lowered along with the player body 2.

As illustrated in vertical sectional front views of Figs. 5 and 6, right ends of the right side surface and the rear surface of the above described magazine 5 are opened, and the right rear part thereof is obliquely notched. As illustrated in plan views of Figs. 4, 5, 9 and 11, the disk mounting plate 4 has an engaging portion 4a corresponding to the engaging member 92 in the sliding mechanism 9 in its right rear part, and the engaging portion 4a is projected toward the notched right rear part of the magazine 5 when the disk mounting plate 4 is loaded in the magazine 5.

If the sliding beam 91 and the engaging member 92 are placed in the home position to load the magazine 5, the engaging portion 4a of any one of the disk mounting plates 4 is positioned at such a height as to be engaged with the engaging member 92. If the player body 2 and the sliding mechanism 9 are positioned at a height corresponding to the designated disk 3, the engaging portion 4a of the disk mounting plate 4 on which the designated disk 3 is mounted is positioned at such a height as to be engaged with the engaging member 92. Subsequently, the sliding beam 91 and the engaging member 92 are moved rightward by operating the driving device 93, to pull the disk mounting plate 4 out of the magazine 5.

As indicated by a two-dot and dash line in Fig. 3 or 9, if the disk mounting plate 4 on which the designated disk 3 is mounted is moved until a disk receiving portion 3a of the disk 3 is positioned between the spindle table 25 and the clamper 27 in the player body 2, a right end of the sliding beam 91 rotates a rotor 28a of the unclamping mechanism 28 supported on the player body 2 in a clockwise direction. Consequently, the operation of the unclamping mechanism 28 is released, whereby the clamper 27 is urged upward by a spring 27a, to interpose the disk receiving portion 3a of the disk 3 between the spindle table 25 and the clamper 27.

Consequently, the disk 3 slightly rises from the disk mounting plate 4, so that it can be rotated and driven by the spindle motor 24 without being brought into contact with the disk mounting plate 4. This state is detected by turning a micro switch 95 provided on the upper part of the player body 2 on by the unclamping mechanism 28.

It is important that the magazine 5 is loaded in such a position that the outer periphery of the disk 3 loaded in the above described magazine 5 is in close proximity to the spindle table 25 and the clamper 27 opposed thereto in the player body 2.

Consequently, the disk 3 is moved over a distance which is slightly larger than the radius of the disk 3 plus the radius of the disk receiving portion 3a, to be positioned between the spindle table 25 and the clamper 27 opposed thereto in the player body 2.

If the driving device 93 is operated in the opposite direction, the sliding beam 91 and the engaging member 92 are moved leftward. Consequently, the unclamping mechanism 28 is operated to separate the clamper 27 from the spindle table 25, whereby the disk 3 is lowered on the disk mounting plate 4 and the disk mounting plate 4 is moved leftward, to return the disc 3 and the disc mounting plate 4 to the magazine 5.

The return of the sliding beam 91 and the engaging member 92 to a left stroke end is detected by another micro switch provided in the lower part of the player body 2.

### (Disk mounting plate)

When the disk mounting plate 4 having the selected disk 3 mounted on its concave portion 4d is moved to the player body 2 to interpose the disk 3 between the spindle table 25 and the clamper 27, the disk 3 approaches the disk mounting plate 4 above the selected disk mounting plate 4. Consequently, the spacing between the upper and lower disk mounting plates 4 is decreased. There is no problem when the spacing between the upper and lower disk mounting plates 4 is set to be large. When the spacing between the upper and lower disk mounting plates 4 is set to be small so as to decrease the heights of the magazine 5 and the disk player for miniaturization, however, the designated disk 3 is liable to be brought into contact with the upper disk mounting plate 4.

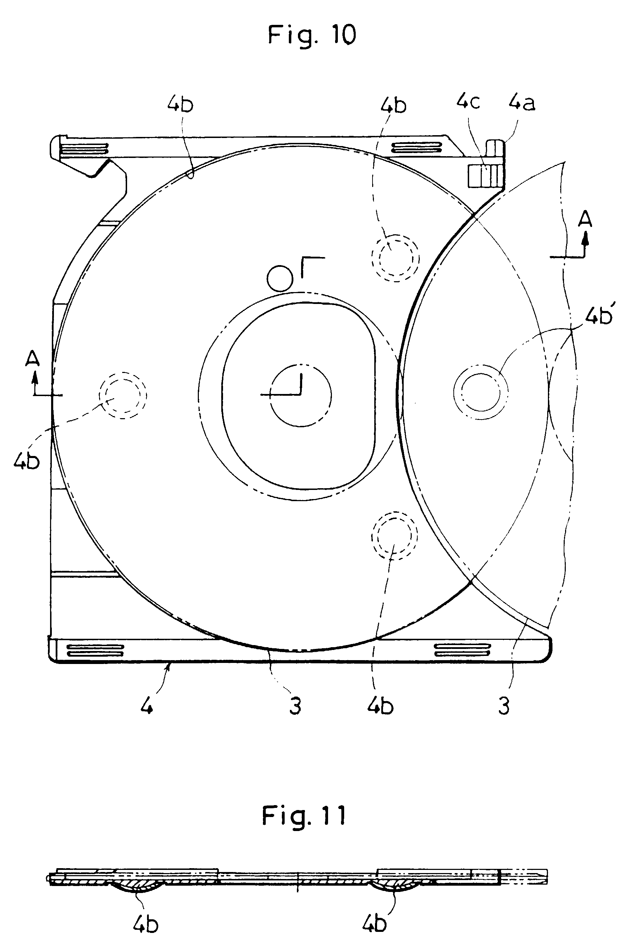

In this disk player, a portion, which corresponds to the disk 3 moved to the player body 2, of the right side of the disk mounting plate 4 is notched in a semicircular shape, as illustrated in a plan view of Fig. 9 or 10 or a cross sectional view of Fig. 11, thereby to prevent the designated disk 3 from being brought into contact with the upper disk mounting plate 4 irrespective of the small spacing between the upper and lower disk mounting plates 4.

Meanwhile, a portion 5e, which corresponds to the uppermost disk 3 moved to the player body 2, of the right side of the lower surface of a top board 5d of the magazine 5 is formed in a semicircular shape and to a small wall thickness, as shown in Fig. 6, so that the top board 5d of the magazine 5 does not prevent the rotation of the disk 3 moved to the player body 2.

Furthermore, in order to prevent the disk 3 mounted on the lower disk mounting plate 4 in the magazine 5 from jumping up from the disk mounting plate 4, three convex portions 4b are provided on the bottom surface of each of the disk mounting plates 4 and an elastic body is affixed to each of the convex portions 4b, so that the convex portions 4b on the upper disc mounting plate 4 are slidably brought into contact with the upper surface of the disk 3 mounted on the lower disk mounting plate 4 in the magazine 5, as shown in Figs. 10 and 11.

One of the three convex portions 4b (a convex portion 4b') is formed, when the disk mounting plate 4 is completely moved to the player body 2, in such a position as to abut on the surface of the disk 3 in the lower stage which is positioned below the disk mounting plate 4.

Even if disk mounting plate 4 is completely moved to the player body 2, whereby the two convex portions 4b are positioned outside of the disk 3 in the lower stage, therefore, the above described convex portion 4b' can abut on the above described disk 3 in the lower stage. Even in a state where the disk mounting plate 4 is thus conveyed into the player body 2, therefore, the vertical movement of the disk 3 in the lower stage can be regulated.

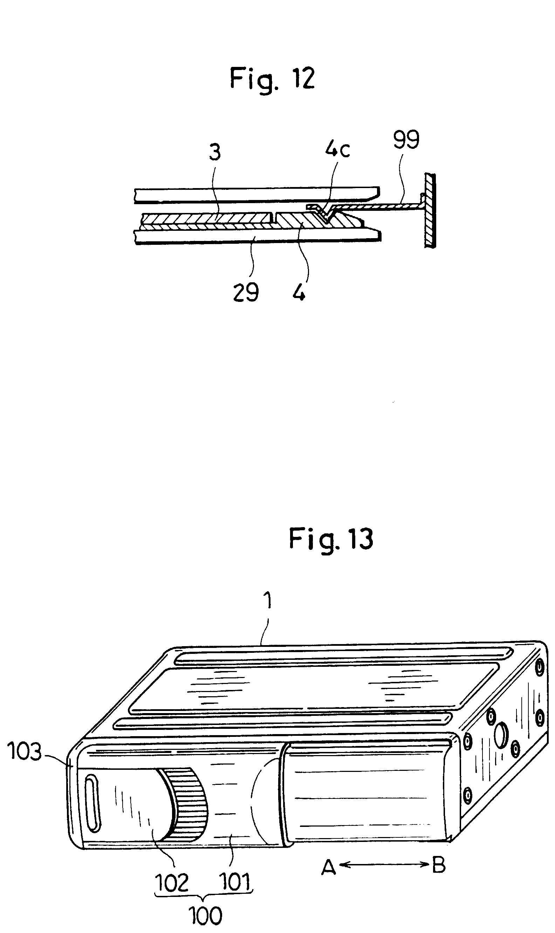

Furthermore, an engaging concave portion 4c is formed in the vicinity of the above described engaging portion 4a in the disk mounting plate 4. As shown in Fig. 12, the guide 29 is provided with a pressure bar spring 99. If the pressure bar spring 99 is engaged with the engaging concave portion 4c of the disk mounting plate 4 inserted into the guide 29, the disk mounting plate 4 is pressed onto the lower side of the guide 29, so that the vertical movement thereof is regulated.

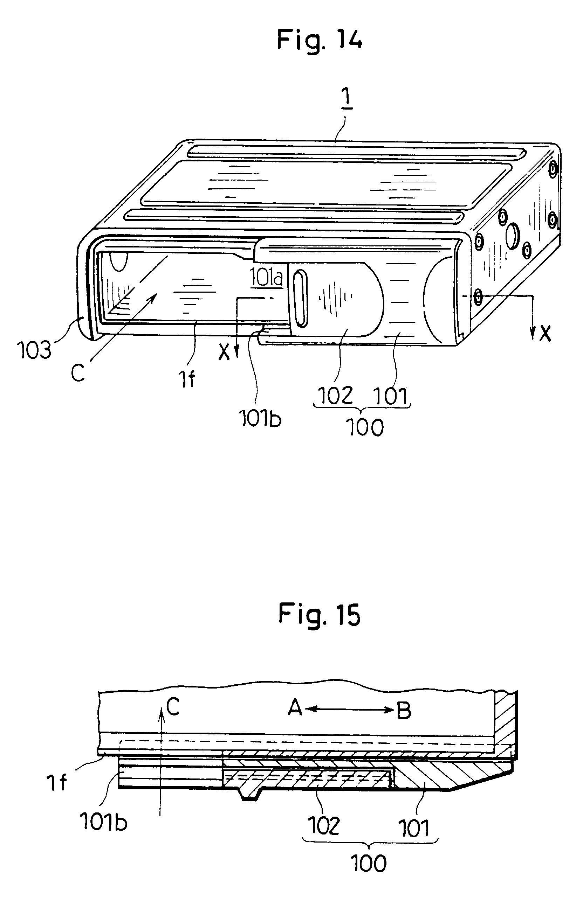

Figs. 13 and 14 are perspective views showing a disk player in which a cover 100 is attached to the front surface of the chassis 1. The above described cover 100 comprises a cover body 101 and a sliding door 102. The cover body 101 is made of, for example, a flat resin plate provided with curvature and is mounted on a frame 103 provided on the front surface of the disk player slidably in the direction of the width of the disk player (in the direction A - B in Figs. 13 and 14). In addition, the cover body 101 on the side of the opening 1f is provided with a notch 101a having such dimensions as to allow assurance that the opening 1f opens fully in the position where the cover body 101 moves farthest apart from the opening 1f, and a rail portion 101b extending in the direction of the width of the player is formed in a portion where the notch 101a is formed.

The sliding door 102 is so provided as to be guided to the above described rail portion 101b and slidable in the direction of the width of the player, as also shown in Fig. 15. Consequently, the effective width of the cover 100 can be changed by sliding the sliding door 102 in the direction of the width of the player in relation to the cover body 101.

### (Operation of cover)

When the opening 1f is closed, the cover 100 is slid in such a direction as to move nearer to the opening 1f and the sliding door 102 is pulled out of the cover body 101 so that the effective width of the cover 100 may be increased. On the other hand, when the opening 1f is opened, the cover 100 is slid in such a direction as to move farther apart from the opening 1f and the sliding door 102 is pressed into the cover body 101 to ensure that the opening 1f opens fully so that the magazine 5 can be loaded in the direction indicated by C in Fig. 15.

Consequently, dust can be prevented from entering the disk player. In addition, the opening and closing work of the opening 1f by the above described cover 100 is thus performed by only sliding, whereby a user can easily operate the cover 100. Moreover, the number of times of occurrence of a fault is smaller, as compared with a structure using a hinge. Since the opening 1f is opened and closed in a two-dimensional manner, the cover 100 is not projected forward, not to prevent the movement of the user.

### (Operation of player mechanism)

In the initial state, the unclamping mechanism 28 of the player body 2 is operated, whereby the clamper 27 is separated from the spindle table 25 by constant spacing. The elevator mechanism 8 places the player body 2 in its lowest position. The sliding beam 91 and the engaging member 92 in the sliding mechanism 9 are positioned in the home position.

When the magazine 5 containing the plurality of disks 3 with they being respectively mounted on the disk mounting plates 4 is inserted into the chassis 1 from the opening 1f on the front surface of the chassis 1 and is locked in the loading position by the locking device 6 and then, the disk 3 which is desired to be played is designated to operate the loading device 7, the player body 2 is first moved to a height corresponding to the designated disk 3 by the elevator mechanism 8. Subsequently, the sliding mechanism 9 is operated, so that the disk mounting plate 4 on which the disk 3 is mounted is pulled out of the magazine 5 and is moved to the player body 2.

The disk 3 and the disk mounting plate 4 are moved over a distance which is slightly larger than the radius of the disk 3 plus the radius of the disk receiving portion 3a from a predetermined position in the magazine 5, so that the disk receiving portion 3a of the disk 3 is moved and positioned between the spindle table 25 and the clamper 27 in the player body 2.

When the disk receiving portion 3a of the disk 3 is moved and positioned between the spindle table 25 and the clamper 27, the operation of the unclamping mechanism 28 is released, so that the clamper 27 is raised toward the spindle table 25, to interpose the disk receiving portion 3a of the disk 3 between the spindle table 25 and the clamper 27. Consequently, the disk 3 rises from the disk mounting plate 4, so that it can be rotated without being brought into contact with the disk mounting plate 4.

Thereafter, when the sliding mechanism 9 is operated in the opposite direction, the unclamping mechanism 28 is operated to separate the clamper 27 from the spindle table 25 by constant spacing, whereby the disk 3 is lowered on the disk mounting plate 4. The disk 3 and the disk mounting plate 4 are moved over a distance which is slightly larger than the radius of the disk 3 plus the radius of the disk receiving portion 3a from the position thereof in the player body 2, to be returned to a predetermined position in the magazine 5.

If the eject button 1h is depressed, the player body 1 is moved to a height corresponding to the lowermost disk 3 by the elevator mechanism 8, the sliding plate on the rear side 81a is further moved rightward to release the operation of the locking mechanism 6, and the cam plate 6a is urged forward by the return spring 6b to eject the magazine 5 forward.

As described in the foregoing, in this disk player, the disk 3 is only moved over a distance which is slightly larger than the radius of the disk 3 plus the radius of the disk receiving portion 3a at the time of loading and unloading of the disc 3 in the player body 2. Accordingly, the size of the disk player can be reduced to one which is approximately the same as the width in the direction of the diameter of a signal recording portion of the disk 3, thereby to make it possible to make the disk player smaller, more compact and more lightweight, as compared with the conventional example in which the disk 3 is moved over a distance which is not less than the diameter thereof.

Furthermore, the disk 3 and the disk mounting plate 4 are linearly moved. Accordingly, a flat region where the disk mounting plate is moved becomes smaller, thereby to make it possible to make the disk player smaller, more compact and more lightweight, as compared with a case where the disk mounting plate 4 is rotated around one corner of the disk mounting plate 4.

Although the present invention has been described and illustrated in detail, it is clearly understood that the same is by way of illustration and example only and is not to be taken by way of limitation, the scope of the present invention being limited only by the terms of the appended claims.

## Claims

1. Compact disk player comprising:
a chassis (1) having an opening provided in one side of the front surface;
a player body (2) arranged in the other side part of the chassis (1) and comprising a spindle table (25) and clamper (27) opposed thereto;
a plurality of disk mounting plates (4) each of which is to mount a disk (3) thereon;
a magazine (5) adapted for containing the plurality of disk mounting plates (4) so that they can be individually pulled out;
an elevator mechanism (8) for aligning in the vertical direction the selected one of said disks (3) and the spindle table (25) and the clamper (27) opposed thereto in said player body (2);
a slidding mechanism (9) for pulling out the disk mounting plate (4) on which said selected disk (3) is mounted and setting a disk receiving portion of the disk (3) between said spindle table and the clamper (27) opposed thereto in the player body (2);
**characterized** in that
said magazine (5) is loaded in said chassis through said opening so that the periphery of all disks (3) loaded in the magazine (5) is in close proximity to the spindle table (25) and the clamper (27) opposed thereto in the player body;
a part of the selected disks (3) moved into said player body (2) still overlaps with the remaining disks (3) in said magazine (5);
the disk mounting plates (4) are provided with the cut away portion corresponding to said part of the selected one of the disks (3);
said cut away portion is not connected to a hole for clamping disks (3); and
the top board (5d) of the magazine (5) is reduced in thickness in a portion (5e) corresponding to said part.

2. The disk player according to claim 1, wherein said opening has a width larger than the half of the width of the chassis.

3. The disk player according to claim 1, wherein said cut away portion has a semicircular shape.

4. The disk player according to claim 1, wherein said disk mounting plate (4) has concave portions (4b) on which the disk (3) is mounted on its upper surface and has convex portions (4b) which abut on the surface of the disk (3) in the lower stage on its lower surface.

5. The disk player according to claim 4, wherein at least one of the convex portions (4b) is formed in such a place of the disc mounting plate (4) as to abut on the surface of the disk (3) in the lower stage which is positioned, when the disk mounting plate (4) is completely moved to the player body, below the disk mounting plate (4).

6. The disk player according to claim 1, wherein said sliding mechanism comprises
a guide (29) for linearly guiding the disk mounting plate (4) toward the player body,
a sliding beam (91) moving along the guide,
an engaging member (92) supported on one end of the sliding beam (91) and projected forward from the sliding beam (91), and
a driving device (93) for driving the sliding beam back and forth.

7. The disk player according to claim 6, wherein said guide (29) comprises a pressure bar spring (99) for pressing the disk mounting plate (4) conveyed to the player body onto said guide (29).

8. The disk player according to claim 1, wherein said elevator mechanism comprises
a pair of front and rear sliding plates (81a, 81b) slidably supported in the lateral direction on respective front and rear walls of the chassis and respectively having step-shaped grooves (84a),
a sliding beam (82) rotatably supported on a bottom wall of the chassis and having both ends engaged with both the sliding plates (81a, 81b) and
a diving device (83) for driving the rear sliding plate,
pins (2a) which are allowed to be moved only in the vertical direction and projected from front and rear walls of the player body being respectively engaged with said step-shaped grooves (84a) formed in said pair of front and rear sliding plates (81a, 81b).

## Patentansprüche

1. Kompaktdiskspieler mit:
einem Gehäuse (1) mit einer auf einer Seite der Vorderoberfläche vorgesehen Öffnung;
einem Spielgerätkörper (2), der auf dem anderen Seitenteil des Gehäuses (1) angeordnet ist und einen Drehteller (25) und eine gegenüberliegende Klammer (27) aufweist;
einer Mehrzahl Diskhalteplatten (4), die jeweils zum Halten einer Disk (3) vorgesehen sind;
einem Magazin (5), das zum Enthalten der Mehrzahl Diskhalteplatten (4) vorgesehen ist, so daß diese einzeln herausgezogen werden können;
einem Hebemechanismus (8) zum Ausrichten in Vertikalrichtung der ausgewählten Disk (3) und des Drehtellers (25) und der ihm gegenüberliegenden Klammer (27) in dem Spielgerätkörper (2);
einem Schiebemechanismus zum Herausziehen der Diskhalteplatte (4), auf der die ausgewählte Disk (3) gelagert ist, und zum Verstellen eines Aufnahmediskabschnitts der Disk (3) zwischen den Drehteller und der gegenüberliegenden Klammer (27) in dem Spielgerätkörper (2);
dadurch **gekennzeichnet,** daß
das Magazin (5) in das Gehäuse über die Öffnung eingebracht wird, so daß der Rand aller in dem Magazin (5) geladenen Disks (3) in enger Nähe zu dem Drehteller (25) und der gegenüberliegenden Klammer (27) in dem Spielgerätkörper sind;
ein Teil der ausgewählten, in den Spielgerätkörper (2) hineinbewegten Disks (3) noch mit den verbleibenden Disks (3) in dem Magazin (5) überlappt;
die Diskhalteplatten (4) mit Ausschnittabschnitten entsprechend dem Teil der ausgewählten Disks (3) ausgestattet sind;
der ausgeschnittene Abschnitt nicht mit einem Loch zum Klammern der Platten (3) verbunden ist; und
die Deckplatte (5d) des Magazins (5) in der Dicke in einem Abschnitt (5e) entsprechend diesem Teil verringert ist.

2. Diskspieler nach Anspruch 1,
bei dem die Öffnung eine Breite größer als die Hälfte der Breite des Gehäuses hat.

3. Diskspieler nach Anspruch 1,
bei dem der Ausschnittsabschnitt eine Halbkreisform hat.

4. Diskspieler nach Anspruch 1,
bei dem die Diskhalteplatte (4) auf ihrer oberen Oberfläche konkave Abschnitte (4b), auf denen die Disk (3) gehalten ist, und konvexe Abschnitte (4b) auf ihrer unteren Oberfläche hat, die gegen die Oberfläche der Disk (3) in der darunterliegenden Stufe anliegen.

5. Diskspieler nach Anspruch 4,
bei dem zumindest einer der konvexen Abschnitte (4b) an einem solchen Platz der Diskhalteplatte (4) ausgebildet ist, daß er an der Oberfläche der Disk (3) in der darunterliegenden angeordneten Stufe anliegt, wenn die Diskhalteplatte (4) vollständig in den Spielgerätkörper unter der Diskhalteplatte (4) bewegt wurde.

6. Diskspieler nach Anspruch 1,
bei dem der Schiebemechanismus aufweist:
eine Führung (29) zum linearen Führen der Diskhalteplatte (4) hin zu dem Spielgerätkörper;
einen Schiebeträger (91), der sich entlang der Führung bewegt;
ein Eingriffselement (92), das auf einem Ende des Schiebeträgers (91) gelagert ist und von dem Schiebeträger (91) hervorspringt; und
einer Antriebsvorrichtung (93) zum Antrieb des Schiebeträgers nach vorne und nach hinten.

7. Diskspieler nach Anspruch 6,
bei dem die Führung (29) eine Druckbalkenfeder (99) aufweist, um die in demSpielgerätkörper entlang der Führung (29) geführte Diskhalteplatte (4) zu pressen.

8. Diskspieler nach Anspruch 1,
bei dem der Hebemechanismus aufweist:
ein Paar vorderer und hinterer Schiebeplatten (81a, 81b), die verschiebbarer in seitlicher Richtung auf jeweiligen Vorder- und Hinterwänden des Gehäuses gestützt sind und jeweilige stufenförmige Nuten (84a) aufweisen;
einen Schiebeträger (82), der drehbar auf einer Bodenwand des Gehäuses abgestützt ist und dessen beide Enden mit den Schiebeplatten (81a, 81b) in Eingriff stehen; und
eine Antriebsvorrichtung (83) zum Antrieb der hinteren Schiebeplatte;
Stifte (2a), denen es ermöglicht ist, sich nur in Vertikalrichtung zu bewegen und die von den vorderen und hinteren Wänden des Spielgerätkörper hervorspringen und jeweils mit den stufenförmigen Nuten (84a) in Eingriff stehen, die in dem Paar vorderer und hinterer Schiebeplatten (81a, 81b) ausgebildet sind.

## Revendications

1. Lecteur de disques compacts comprenant :
un châssis (1) ayant une ouverture prévue dans un premier côté de la surface avant ;
un corps de lecteur (2) agencé dans l'autre côté du châssis (1) et comportant une table à broche (25) et un dispositif de blocage (27) opposé à cette dernière ;
une pluralité de plaques de montage de disque (4) dont chacune peut porter un disque (3) ;
un magasin (5) prévu pour contenir la pluralité de plaques de montage de disque (4) de sorte qu'elles peuvent être extraites individuellement ;
un mécanisme élévateur (8) pour aligner, dans la direction verticale, le disque choisi parmi lesdits disques (3) et la table à broche (25) et le dispositif de blocage opposé à cette dernière, dans ledit corps de lecteur (2) ;
un mécanisme coulissant (9) pour extraire la plaque de montage de disque (4) sur laquelle est monté ledit disque choisi (3) et positionner une partie de réception de disque du disque (3) entre ladite table à broche et le dispositif de blocage (27) opposé à cette dernière, dans le corps de lecteur (2) ;
caractérisé en ce que :
ledit magasin (5) est chargé dans ledit châssis à travers ladite ouverture de sorte que la périphérie de tous les disques (3) chargés dans le magasin (5) se trouve à proximité immédiate de la table à broche (25) et du dispositif de blocage (27) opposé à cette dernière dans le corps de lecteur ;
une partie des disques choisis (3) introduits dans ledit corps de lecteur (2) chevauche encore les disques (3) qui restent dans ledit magasin (5) ;
les plaques de montage de disque (4) comportent la partie découpée correspondant à ladite partie du disque choisi parmi les disques (3) ;
ladite partie découpée n'est pas reliée à un trou pour le blocage des disques (3) ; et
le panneau supérieur (5d) du magasin (5) est réduit en épaisseur dans une portion (5e) correspondant à ladite partie.

2. Lecteur de disques selon la revendication 1, dans lequel ladite ouverture a une largeur plus grande que la moitié de la largeur du châssis.

3. Lecteur de disques selon la revendication 1, dans lequel ladite partie découpée présente une configuration semi-circulaire.

4. Lecteur de disques selon la revendication 1, dans lequel ladite plaque de montage de disque (4) présente des parties concaves (4b) sur lesquelles le disque (3) est monté,sur sa surface supérieure,et elle présente des parties convexes (4b) qui viennent en butée sur la surface du disque (3) de l'étage inférieur, sur sa surface inférieure.

5. Lecteur de disques selon la revendication 4, dans lequel au moins une des parties convexes (4b) est formée à un endroit de la plaque de montage de disque (4) tel qu'elle bute sur la surface du disque (3) de l'étage inférieur qui se trouve,lorsque la plaque de montage de disque (4) est complètement amenée dans le corps de lecteur, au-dessous de la plaque de montage de disque (4).

6. Lecteur de disques selon la revendication 1, dans lequel ledit mécanisme coulissant comprend :
un guidage (29) pour guider linéairement la plaque de montage de disque (4) vers le corps de lecteur ;
une poutre coulissante (91) se déplaçant le long du guidage ;
un élément d'attaque (92) supporté sur une extrémité de la poutre coulissante (91) et en saillie vers l'avant à partir de la poutre coulissante (91) ; et
un dispositif d'entraînement (93) pour entraîner la poutre coulissante en va-et-vient.

7. Lecteur de disques selon la revendication 6, dans lequel ledit guidage (29) comprend un ressort de barre de pression (99) pour presser la plaque de montage de disque (4), amenée au corps de lecteur, sur le dit guidage (29).

8. Lecteur de disques selon la revendication 1, dans lequel ledit mécanisme élévateur comprend :
deux plaques coulissantes avant et arrière (81a,81b) supportées de façon coulissante dans la direction latérale sur des parois avant et arrière respectives du châssis et comportant respectivement des rainures en gradins (84a) ;
une poutre coulissante (82) supportée de façon pivotante sur une paroi inférieure du châssis et dont les deux extrémités sont en prise avec les deux plaques coulissantes (81a,81b) ; et
un dispositif d'entraînement (83) pour entraîner la plaque coulissante arrière ;
des tiges (2a) qui peuvent se déplacer seulement dans la direction verticale et qui font saillie à partir des parois avant et arrière du corps de lecteur étant respectivement en prise avec lesdites rainures en gradins (84a) formées dans lesdites deux plaques coulissantes avant et arrière (81a,81b).
